# DEMANDE DE BREVET EUROPEEN

(11) **EP 4 737 355 A1**
(43) Date de publication de la demande: **06.05.2026**
(21) Numéro de dépôt: 25213811.0
(22) Date de dépôt: 05.11.2025
(51) Int. Cl.: B65G 1/02, A47B 55/02, A47B 96/02

(54) **ENSEMBLE LOGISTIQUE**

(30) Priorité: 05.11.2024 FR 2412127
(71) Demandeur: YTHALES INVEST, 37520 La Riche (FR)
(72) Inventeur: TESSIER, Charles, 37520 LA RICHE (FR); COCAIGN, Maël, 37520 LA RICHE (FR)
(74) Mandataire: den Braber, Gérard Paul

(57) **Abrégé**

Un ensemble logistique comprend un support équipé d'une poutre et un plancher au moins partiellement filaire pouvant être posé sur le support. Un organe de fixation amovible permet de maintenir le plancher sur la poutre. Cet organe de fixation se compose d'une partie principale, d'une première extrémité formant un crochet qui s'engage de manière pivotante sur un fil du plancher et d'une seconde extrémité qui s'encliquette sur la poutre. D'une part, le crochet présente une extrémité libre orientée vers la partie principale. D'autre part, la partie principale de l'organe de fixation est disposée de manière à côtoyer une face intérieure de la poutre. Cette configuration est peu coûteuse, facile à mettre en œuvre et améliore la sécurité des opérateurs en éliminant les risques d'accrochage liés à l'organe de fixation lui-même.

## Description

### DOMAINE TECHNIQUE

Un aspect de l'invention concerne un ensemble logistique comprenant un support équipé d'une poutre et un plancher, au moins partiellement filaire, apte à être posé sur le support. L'ensemble logistique peut être, par exemple. sous la forme d'un rayonnage comprenant un ensemble de poutres. Des étagères peuvent être formés en posant des planchers respectifs sur des paires de poutres respectives. Des marchandises, ou autres charges, peuvent alors être placées sur ces étagères et peuvent ensuite être retirées de ces étagères.

### ARRIÈRE-PLAN TECHNOLOGIQUE

Dans un ensemble logistique en question, le plancher risque d'être déplacé ou être soulevé par inadvertance pendant des manipulations des charges notamment avec des engins de manutention. Ce risque peut être réduit, voire éliminé, en vissant le plancher sur le support et, plus spécifiquement, sur la poutre de ce dernier, ou sur les poutres de ce dernier, si le support en comporte plusieurs. Une autre technique consiste à utiliser des cerclages ou des colliers pour sécuriser le plancher sur le support.

Toutefois, le temps de mise en œuvre de ces techniques est relativement long. Des opérations de vissage peuvent être particulièrement fastidieuses. De plus, ces opérations nécessitent des outils adaptés. Certaines techniques peuvent nécessiter plusieurs pièces. Ces inconvénients sont particulièrement ressentis dans des entrepôts qui peuvent compter plusieurs milliers, ou même dizaines de milliers, de planchers à installer. La charge de travail et les coûts de mise en œuvre des techniques conventionnelles peuvent être prohibitifs.

Le document CN 112 089 237 A divulgue une "boucle de fixation entre une palette en treillis métallique et une étagère". Cette boucle de fixation est également formée à partir d'une plaque et comprend une plaque verticale, une plaque horizontale et un crochet. Le crochet est apte à s'engager sur un fil horizontal de la palette en treillis métallique, et une autre partie de la boucle est apte à s'encliqueter sur la poutre de l'étagère pour fixer la palette. Toutefois, dans cette solution de l'art antérieur, la plaque verticale de la boucle de fixation reste positionnée sur une face extérieure de la poutre, créant une saillie potentiellement dangereuse pour les opérateurs ou les marchandises. De plus, le crochet présente une extrémité libre exposée vers le haut et vers l'extérieur, constituant un risque d'accrochage supplémentaire.

### EXPOSÉ DE L'INVENTION

Il existe un besoin pour une technique peu coûteuse et facile à mettre en œuvre permettant le maintien d'un plancher sur un support équipé d'au moins une poutre et qui, en outre, améliore la sécurité pour les opérateurs en éliminant les risques d'accrochage liés à l'organe de fixation lui-même.

Cet objectif est atteint grâce à un organe de fixation présentant une configuration particulière, telle que définie dans la revendication 1. L'orientation de l'extrémité libre du crochet vers la partie principale de l'organe permet à celui-ci de pivoter à travers une ouverture du plancher. Ainsi, la partie principale puisse venir côtoyer une face intérieure de la poutre, voire venir se disposer contre cette face. Cette disposition assure que cette partie de l'organe ne fait saillie sur la face extérieure de la poutre, éliminant un risque d'accrochage pour les opérateurs ou les marchandises. De plus, une fois l'organe encliqueté, l'extrémité libre du crochet ne fait pas saillie vers l'extérieur mais est orientée vers l'intérieur, éliminant un autre risque d'accrochage pour les opérateurs ou les marchandises. Ces caractéristiques permettent d'obtenir un ensemble logistique particulièrement sûr et facile à mettre en œuvre.

Un autre avantage notable de l'organe de fixation réside dans son caractère particulièrement universel. En effet, sa conception lui permet de s'adapter à une grande variété de planchers au moins partiellement filaires, sans que ceux-ci ne requièrent de modifications ou d'aménagements spécifiques. L'organe de fixation est conçu pour utiliser l'une des ouvertures naturellement présentes dans le maillage du plancher pour se positionner, contrairement à des solutions de l'art antérieur qui exigent la présence de trous ou de découpes dédiés dans le plancher ou dans un profilé de celui-ci. Cette universalité d'application constitue un avantage technique et économique significatif, en permettant une installation rapide sur des équipements standards et déjà existants.

À des fins d'illustration, quelques modes de réalisation de l'invention sont décrits en détail en référence aux dessins annexés. Cette description fera apparaître des caractéristiques complémentaires à celles mentionnées dans ce qui précède, ainsi que des avantages que ces caractéristiques complémentaires peuvent apporter.

### DESCRIPTION SOMMAIRE DES DESSINS

La figure 1 est une vue schématique en perspective d'un mode de réalisation d'un ensemble logistique avec un cercle indiquant une partie de celui-ci.
La figure 2 est une vue schématique en perspective de la partie du mode de réalisation de l'ensemble logistique indiquée par le cercle sur la figure 1, la figure 2 constituant un gros plan illustrant cette partie plus en détail.
La figure 3 est une vue schématique de côté de la partie du mode de réalisation de l'ensemble logistique dans laquelle un organe de fixation amovible est en position de repos.
La figure 4 est une vue schématique de côté de la partie du mode de réalisation de l'ensemble logistique dans laquelle l'organe de fixation amovible est en position de verrouillage.
La figure 5 est une vue schématique en perspective de l'organe de fixation amovible.
La figure 6 est une vue schématique de côté d'une partie d'un autre mode de réalisation de l'ensemble logistique dans laquelle un organe de fixation amovible selon un autre mode de réalisation est en position de repos.
La figure 7 est une vue schématique de côté de la partie de l'autre mode de réalisation de l'ensemble logistique dans laquelle l'organe de fixation amovible selon l'autre mode de réalisation est en position de verrouillage.

### DESCRIPTION DE QUELQUES MODES DE REALISATION

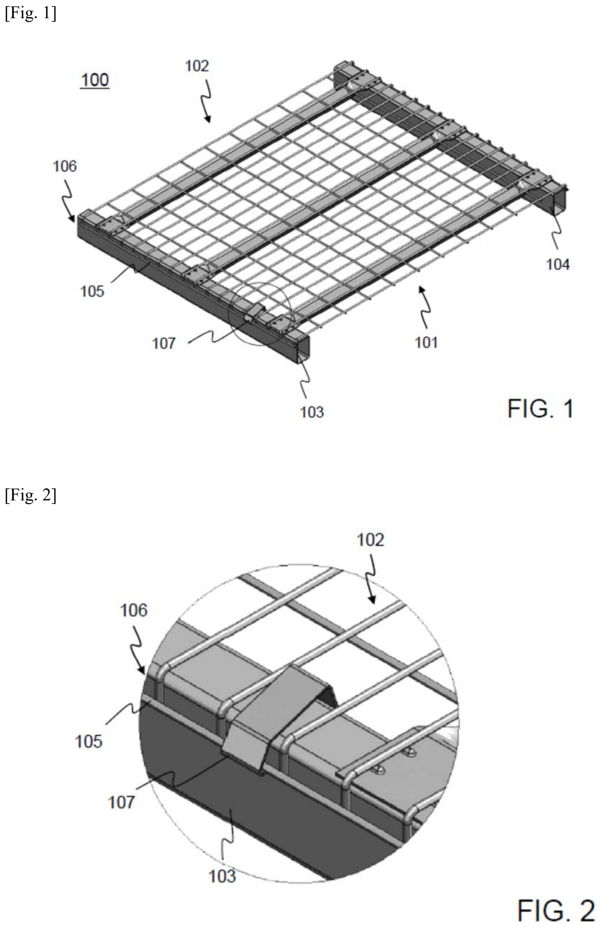

La figure 1 illustre schématiquement un mode de réalisation d'un ensemble logistique 100. La figure 1 présente une vue schématique en perspective de ce mode de réalisation 100. Le mode de réalisation 100 illustré peut constituer une structure de base pour rayonnage. Ce mode de réalisation 100 sera ci-après dénommé la structure de base pour rayonnage 100 à titre d'exemple et pour faciliter la lecture. La figure 1 comprend un cercle indiquant une partie de la structure de base pour rayonnage 100.

La figure 2 illustre schématiquement la partie de la structure de base pour rayonnage 100 indiquée par le cercle sur la figure 1. La figure 2 présente une vue schématique en perspective constituant un gros plan de cette partie, l'illustrant plus en détail.

La structure de base pour rayonnage 100 comprend un support 101 et un plancher 102 apte à être posé sur le support 101. Le support 101 est équipé d'au moins une poutre. Dans ce mode de réalisation, le support 101 est équipé d'une paire de poutres 103, 104 sur laquelle le plancher 102 peut être posé. L'une des poutres 103 sera ci-après dénommée la poutre avant 103, et l'autre la poutre arrière 104, pour faciliter la lecture.

Le plancher 102 est au moins partiellement filaire. Dans ce mode de réalisation, le plancher 102 est sous la forme d'une grille comprenant des fils périphériques. Un fil périphérique 105 côtoie la poutre avant 103 sur un côté extérieur de celle-ci. Un autre fil périphérique côtoie la poutre arrière 104 sur un côté extérieur de celle-ci. Ce dernier fil n'est pas visible à la figure 1. L'un et l'autre fil périphérique seront ci-après dénommés respectivement le fil périphérique avant 105 et le fil périphériques arrière pour faciliter la lecture.

Plus en détail, dans ce mode de réalisation, le fil périphérique avant 105 fait partie d'un rebord filaire avant 106 qui longe la poutre avant 103 tout en recouvrant une partie de son côté extérieur. Réciproquement, le fil périphérique arrière fait partie d'un rebord filaire arrière qui longe la poutre arrière 104 tout en recouvrant une partie de son côté extérieur. Ce dernier rebord filaire n'est pas visible à la figure 1.

La structure de base pour rayonnage 100 comprend en outre un organe de fixation amovible 107 qui est partiellement visible à la figure 1. Il en va de même pour la figure 2 qui offre un gros plan de la partie visible du mode de réalisation de l'organe de fixation amovible 107. L'organe de fixation amovible 107 permet de maintenir le plancher 102 sur la poutre avant 103. L'organe de fixation amovible 107 sera ci-après dénommé l'organe de fixation 107, sans l'adjectif amovible, pour faciliter la lecture. Quelques modes de réalisation de l'organe de fixation 107 seront décrits plus en détail dans ce qui suit.

La structure de base pour rayonnage 100 peut également comprendre au moins un organe de fixation supplémentaire permettant de maintenir le plancher 102 sur la poutre arrière 104. Un tel organe de fixation supplémentaire n'est pas représenté à la figure 1 par souci de simplicité et de clarté. En effet, chaque organe de fixation supplémentaire peut être similaire, voire identique, à l'organe de fixation 107 représenté à la figure 1 et, plus en détail, à la figure 2.

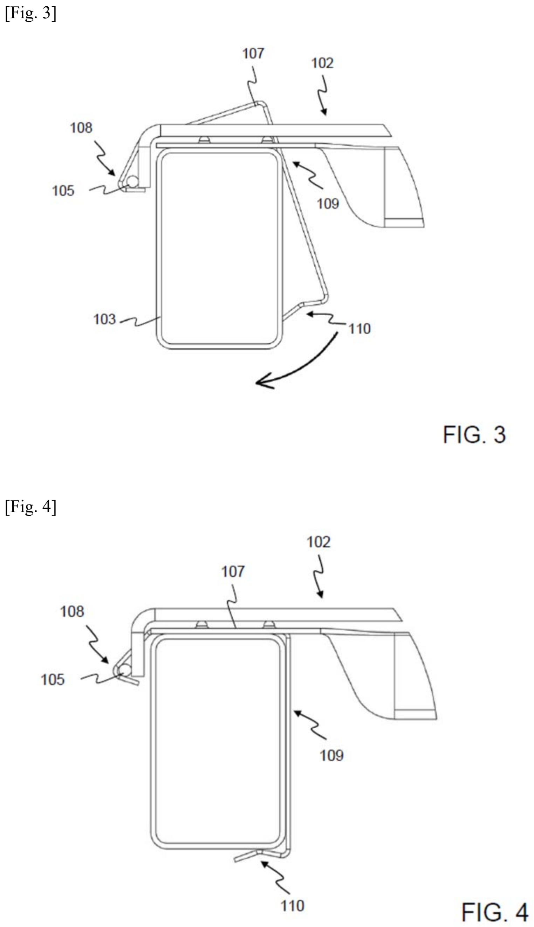

La figure 3 illustre schématiquement un mode de réalisation de l'organe de fixation 107 en position de repos dans la partie de la structure de base pour rayonnage 100. La figure 3 présente une vue schématique en perspective de cette partie dans laquelle l'organe de fixation 107 est en position de repos. L'organe de fixation 107 présente une première extrémité 108 formant un crochet, apte à s'engager de manière pivotante sur le fil périphérique avant 105 du plancher 102. Comme on peut le voir, ledit crochet présente une extrémité libre qui est orientée vers une partie principale 109 de l'organe de fixation. Dans ce mode de réalisation, cette première extrémité 108 présente un profil latéral en forme de V. Plus spécifiquement, le profil latéral en forme de V de la première extrémité 108 présente un angle aigu. Cet angle peut être, par exemple, compris entre 50 et 80 degrés, plus précisément d'environ 65 degrés.

La partie principale 109 de l'organe de fixation 107 se termine par une seconde extrémité 110. La partie principale 109 a traversé une ouverture dans le plancher 102 pour faire face à la poutre avant 103 avec un angle entre celles-ci. Dans ce mode de réalisation, la partie principale 109 présente un profil latéral correspondant à une partie de celui de la poutre avant 103. Spécifiquement, le profil latéral de la partie principale 109 est en forme d'U présentant deux branches, l'une étant plus courte que l'autre. La branche la plus courte comprend la seconde extrémité 110 de l'organe de fixation 107. L'autre branche est jointe à la première extrémité 108 qui s'engage de manière pivotante sur le fil périphérique avant 105 du plancher 102.

La seconde extrémité 110 est apte à s'encliqueter sur la poutre par un mouvement de pivotement de l'organe de fixation 107 autour du fil côtoyant la poutre. Une flèche sur la figure 3 représente ce mouvement de pivotement. Un opérateur peut provoquer le mouvement de pivotement et ainsi un encliquetage par une simple manipulation de l'organe de fixation 107. Par exemple, il lui suffit d'exercer une pression suffisante sur la branche de la partie principale 109 jointe à la première extrémité 108.

Dans ce mode de réalisation, cette seconde extrémité 110 présente également un profil latéral en forme de V. Toutefois, contrairement à la première extrémité 108, le profil latéral en forme de V de la seconde extrémité 110 présente un angle obtus. Cet angle peut être, par exemple, compris entre 130 et 170 degrés, plus précisément d'environ 150 degrés.

La figure 4 illustre schématiquement le mode de réalisation l'organe de fixation 107 en position de verrouillage dans la partie de la structure de base pour rayonnage 100. La figure 4 présente une vue schématique en perspective de cette partie dans laquelle le mode de réalisation l'organe de fixation 107 est en position de verrouillage. En position de verrouillage, la poutre avant 103 est prise entre les deux branches de la partie principale 109 de l'organe de fixation 107. L'organe de fixation 107 est serré et ainsi verrouillé sur la poutre avant 103. Par conséquent, le plancher 102 est maintenu sur la poutre avant 103 car le fil périphérique avant 105 du plancher 102 est pris dans la première extrémité 108 de l'organe de fixation 107. La partie principale 109 de l'organe de fixation est disposée de manière à côtoyer une face intérieure de la poutre 103, sans aucune saillie sur la face extérieure de celle-ci. La face intérieure de la poutre 103 est celle qui est orientée vers l'intérieur du support 101.

Une simple manipulation suffit pour ramener l'organe de fixation 107 qui est en position de verrouillage tel qu'illustré à la figure 4 à nouveau en position de repos tel qu'illustré à la figure 3. Par exemple, l'opérateur peut poser la pouce d'une de ses mains sur la première extrémité 108 et un ou plusieurs autres doigts de cette main sur la partie principale 109 entre les deux branches. Ensuite, en tournant la main légèrement vers lui, il provoque un mouvement de pivotement opposé à celui illustré à la figure 3, libérant ainsi la deuxième extrémité de l'organe de fixation 107. Une fois en position de repos, l'opérateur pourrait aisément retirer l'organe de fixation 107, s'il le souhaite, en dégageant sa première extrémité 108 du fil périphérique avant 105.

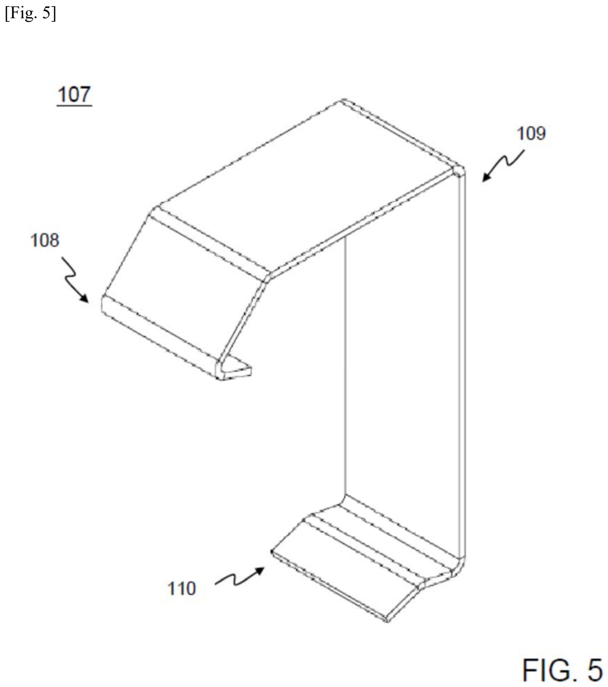

La figure 5 illustre schématiquement le mode de réalisation de l'organe de fixation 107 déjà décrit dans ce qui précède dans son contexte d'application en référence à la figure 3 et la figure 4. La figure 5 présente une vue schématique en perspective de l'organe de fixation 107. Dans ce mode de réalisation, l'organe de fixation 107 amovible 107 est d'un seul tenant et présente une déformabilité élastique. Par exemple, l'organe de fixation 107 amovible 107 peut être formé d'une lame de métal résilient pliée.

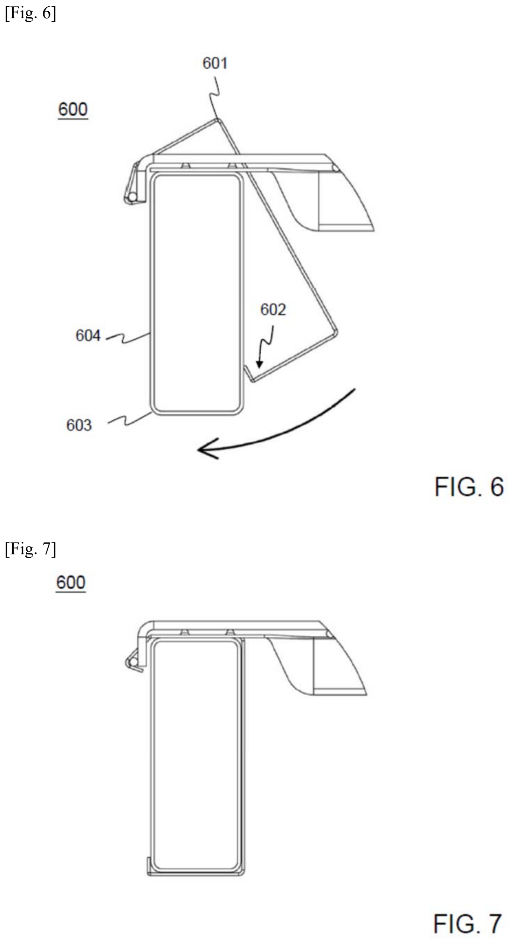

La figure 6 et la figure 7 illustrent schématiquement une partie d'un autre mode de réalisation de l'ensemble logistique 600 comprenant un organe de fixation amovible 601 selon un autre mode de réalisation. La figure 6 et la figure 7 présentent chacune une vue schématique comparable respectivement à celle de la figure 3 et de la figure 4. Dans ce mode de réalisation, l'organe de fixation amovible 601 présente un rebord 602 apte à s'engager sur un bord 603 d'une poutre 604. L'organe de fixation amovible 601 selon cet autre mode de réalisation fonctionne d'une manière similaire à celle décrite dans ce précède en référence à la figure 3 et à la figure 4. Dans la figure 6, l'organe de fixation amovible 601 selon l'autre mode de réalisation est en position de repos. Un mouvement de pivotement permet de mettre cet organe de fixation 601 en position de verrouillage illustré à la figure 7.

En résumé, un ensemble logistique a été décrit qui comprend :
- un support équipé d'une poutre,
- un plancher au moins partiellement filaire apte à être posé sur le support de telle sorte qu'un fil du plancher côtoie la poutre, et
- un organe de fixation amovible apte à maintenir le plancher sur la poutre, l'organe de fixation ayant une première extrémité apte à s'engager de manière pivotante sur le fil côtoyant la poutre tandis qu'une partie principale de l'organe de fixation amovible se terminant par une seconde extrémité a traversé une ouverture dans le plancher pour faire face à la poutre avec un angle entre celles-ci, la seconde extrémité étant apte à s'encliqueter sur la poutre par un mouvement de pivotement de l'organe de fixation amovible autour du fil côtoyant la poutre.

### Les modes de réalisation décrits en référence aux dessins illustrent

l'invention plutôt qu'ils ne la limitent. Les modes de réalisation ne sont donc pas limitatifs. D'autres variantes peuvent être envisagées sans sortir du cadre de l'invention défini par les revendications. Par exemple, bien que le crochet de la première extrémité 108 ait été décrit avec un profil en V, d'autres formes sont possibles, pourvu que son extrémité libre soit orientée vers la partie principale afin d'éviter tout bord saillant. Le crochet pourrait ainsi présenter un profil en U, une courbe arrondie, ou toute autre géométrie repliée sur elle-même permettant un engagement pivotant sur le fil du plancher tout en garantissant la sécurité. De même, la seconde extrémité 110, apte à s'encliqueter sur la poutre, peut avoir d'autres formes qu'un profil en V. Elle pourrait être une simple languette pliée ou une forme crantée, conçue pour assurer un verrouillage élastique fiable sur une face inférieure de la poutre. L'essentiel est qu'elle permette un encliquetage et un décliquetage manuels sans outil.

Les signes de références n'ont aucun caractère limitatif. Le verbe « comprendre » dans une revendication n'exclut pas la présence d'autres éléments ou d'autres étapes que ceux ou celles listés dans la revendication. Il en va de même pour des verbes similaires tel que « comporter » et « inclure ».

## Revendications

1. Ensemble logistique comprenant :
- un support équipé d'une poutre,
- un plancher au moins partiellement filaire apte à être posé sur le support, et
- un organe de fixation amovible apte à maintenir le plancher sur la poutre, l'organe de fixation ayant une partie principale, une première extrémité formant un crochet apte à s'engager de manière pivotante sur un fil du plancher, et une seconde extrémité apte à s'encliqueter sur la poutre,
**caractérisé en ce que** :
- d'une part, ledit crochet présente une extrémité libre orientée vers la partie principale, et
- d'autre part, la partie principale de l'organe de fixation est disposée de manière à côtoyer une face intérieure de la poutre.

2. Ensemble logistique selon la revendication 1, dans lequel la première extrémité de l'organe de fixation amovible présente un profil latéral en forme de V.

3. Ensemble logistique selon la revendication 2, dans lequel le profil latéral en forme de V de la première extrémité de l'organe de fixation amovible présente un angle aigu.

4. Ensemble logistique selon l'une des revendications 1 à 3, dans lequel la seconde extrémité de l'organe de fixation amovible présente un profil latéral en forme de V.

5. Ensemble logistique selon la revendication 4, dans lequel le profil latéral en forme de V de la seconde extrémité de l'organe de fixation amovible présente un angle obtus.

6. Ensemble logistique selon l'une des revendications 1 à 3, dans lequel la seconde extrémité de l'organe de fixation amovible présente un rebord apte à s'engager sur un bord de la poutre.

7. Ensemble logistique selon l'une des revendications 1 à 6, dans lequel l'organe de fixation amovible est d'un seul tenant.

8. Ensemble logistique selon la revendication 7, dans l'organe de fixation amovible présente une déformabilité élastique.

9. Ensemble logistique selon la revendication 8, dans l'organe de fixation amovible est formé d'une lame de métal résilient pliée.

10. Ensemble logistique selon l'une des revendications 1 à 9, dans lequel le plancher comprend un rebord filaire, ledit crochet étant apte à s'engager de manière pivotante sur un fil du rebord filaire.

11. Ensemble logistique selon l'une des revendications 1 à 10, dans lequel le fil sur lequel ledit crochet est apte à s'engager est un élément périphérique du plancher.

12. Ensemble logistique selon l'une des revendications 1 à 11, dans lequel ;
- la poutre est une première poutre d'un ensemble de poutres qui font partie du support, et
- l'ensemble logistique comprend un organe de fixation amovible supplémentaire apte à maintenir le plancher sur la deuxième poutre, l'organe de fixation amovible supplémentaire étant similaire à l'organe de fixation amovible apte à maintenir le plancher sur la première poutre.
